# FASCICULE DE BREVET EUROPEEN

(11) **EP 2 199 157 B1**
(45) Date de publication et mention de la délivrance du brevet: **18.01.2012**
(21) Numéro de dépôt: 09177190.7
(22) Date de dépôt: 26.11.2009
(51) Int. Cl.: B60R 13/08, F01N 13/10

(54) **Moteur thermique**
Verbrennungsmotor
Combustion engine

(30) Priorité: 11.12.2008 FR 0858482
(43) Date de publication de la demande: 23.06.2010
(73) Titulaire: Peugeot Citroën Automobiles SA, 78140 Vélizy-Villacoublay (FR)
(72) Inventeur: Pitaud, Bernard, 37170 Chambray-les-Tours (FR)
(74) Mandataire: Ménès, Catherine

(56) Documents cités:
- EP-A- 1 170 497
- US-A- 5 233 832
- US-A1- 2002 166 720

## Description

La présente invention concerne un moteur thermique comportant au moins une électrovanne située au-dessus d'un collecteur d'échappement du moteur et un dispositif de protection thermique étanche de l'électrovanne.

Les températures élevées des moteurs des véhicules automobiles, la complexité, le confinement et les distances séparatives des pièces qui les constituent nécessitent de plus en plus des protections adaptées des pièces environnantes.

A titre d'exemple, et de façon non limitative de l'objet et de la portée de la présente invention, ces pièces sensibles à la température peuvent être des électrovannes d'un moteur de véhicule. En effet, sur certains moteurs, les électrovannes sont situées juste au-dessus du collecteur d'échappement. Ces électrovannes ne résistant pas à des températures supérieures à 130°C, il y lieu de recourir à une protection thermique.

On connaît déjà des solutions techniques de protection thermique de pièces de moteurs de véhicules.

Le document FR 2 717 224 décrit un collecteur d'échappement pour le moteur d'un véhicule automobile muni d'un dispositif d'échappement à catalyseur. Ce collecteur d'échappement comprend une semelle destinée à être fixée sur la culasse du moteur, et une tubulure formée d'une paroi extérieure et d'une paroi intérieure assemblées par leurs bords respectifs sur la semelle. Un matériau formant écran au rayonnement thermique, de type fibre en céramique, est interposé entre les parois extérieure et intérieure de la tubulure.

Le document EP 1 690 743 B1 décrit un écran, sous forme de bouclier thermique, qui comporte deux parties qui peuvent être reliées l'une à l'autre de manière amovible par un dispositif de liaison et dont au moins une partie est rigide. Le dispositif de liaison est constitué d'un bouton pression dont la partie sphérique est reliée à l'une des parties d'écran et dont la pièce en oeillet est reliée à l'autre partie d'écran, laquelle autre partie d'écran est flexible, a une structure en natte et est, au moins en partie, formée d'une étoffe en matière plastique qui résiste à la chaleur et est constituée de fibres et/ou de fils d'aramide, de fibres et/ou de fils de carbone, ainsi que de fibres ou de fils minéraux.

Le document US 6 318 734 B1 décrit un joint monobloc avec son support, qui est adapté à être utilisé avec un bouclier thermique dans un dispositif de bouclier thermique à joint d'étanchéité. Le support intégré comporte une cavité réceptrice conçue pour positionner de manière précise et retenir une partie du bouclier. Le support intégré et le joint incorporent des éléments additionnels intégrés pour améliorer le positionnement et la liaison du bouclier avec le joint.

Le document US 2004/0232625 A1 décrit un dispositif de bouclier thermique et de garniture, qui présente trois pièces : un premier écran thermique, un second écran thermique et un joint. Chacune des trois pièces comporte une partie en forme de flasque et celle du joint est prise en « sandwich » entre les parties en forme de flasque des deux écrans thermiques. La partie en forme de flasque du joint est plus mince que les parties correspondantes des deux écrans thermiques. La minceur du flasque du joint permet à ce dernier de s'engager dans des moyens d'assemblage filetés sans porter préjudice à l'intégrité du filetage du moyen d'assemblage.

Enfin, le document US 2006/0138300 A1 décrit un bouclier thermique pour la protection d'un bâti-moteur. Le bouclier thermique comprend un métal de base ou substrat, qui peut être positionné sensiblement dans la périphérie du bâti-moteur. Le substrat comporte une surface réfléchissant la chaleur tournée vers l'extérieur à partir du bâti-moteur pour bloquer le transfert de chaleur radiante vers le bâti. Un organe de fixation est fixé sur le substrat. L'organe de fixation peut être positionné entre le moteur et le bâti-moteur, de façon à fixer le substrat en position. Le substrat comporte une natte de fibres de verre tissée et la surface réfléchissant la chaleur comporte une feuille de métal attachée à la natte.

Toutefois, l'utilisation des solutions connues de l'art antérieur, par exemple d'un écran thermique conventionnel pour protéger les électrovannes présentes, par exemple sur la surface de la culasse contre laquelle sont fixées les électrovannes, des risques de passage d'air chaud formant un effet « cheminée », c'est-à-dire un mouvement ascensionnel des gaz chauds provoqué par des courants de convection à l'intérieur d'une enceinte verticale.

Il y a, par conséquent nécessité d'une protection spécifique, différente des écrans thermiques classiques.

Le but de la présente invention est de fournir un dispositif de protection thermique étanche de pièces sensibles à la température, en particulier des électrovannes dans un moteur de véhicule, qui perfectionne les dispositifs connus de l'art antérieur et garantisse parfaitement la tenue desdites pièces sensibles à la température malgré leur positionnement dans une zone très chaude, par exemple et de façon non limitative de l'objet et de la portée de la présente invention, la tenue des électrovannes d'un moteur de véhicule automobile malgré leur positionnement juste au dessus du collecteur d'échappement.

Un autre but de la présente invention est de fournir un tel dispositif de protection thermique, qui permette d'optimiser l'espace environnant les zones très chaudes du moteur, comme l'espace entourant le collecteur d'échappement.

Un autre but de la présente invention est de fournir un tel dispositif de protection thermique, qui permette de limiter la complexité et le montage des pièces protégées sensibles à la température, telles les électrovannes d'un moteur de véhicule, qui soit de conception simple, de réalisation aisée, et qui soit, par conséquent, économique.

Pour parvenir à ces buts, la présente invention a pour objet un moteur thermique selon les caractéristiques de la revendication 1.

De manière préférentielle, le joint d'étanchéité est réalisé en caoutchouc, de préférence des caoutchoucs synthétiques résistants aux températures de l'air chaud tels que des terpolymères d'éthylène propylène diène (EPDM) ou des copolymères d'éthylène méthylacrylate (tel que le VAMAC, marque déposé de la société Dupont, Etats-Unis). En variante, le joint d'étanchéité peut être réalisé en tissu recouvert de silicone.

Le joint d'étanchéité peut être fixé sur le déflecteur thermique par tout moyen de fixation connu en soi, tel que le collage, le rivetage, le vissage, ou encore le surmoulage sur le déflecteur thermique.

Le déflecteur thermique de l'électrovanne peut être réalisé dans une matière plastique résistante à haute température, ou en métal, tel que par exemple de l'acier ou de l'aluminium, de préférence gaufré.

Le joint d'étanchéité épouse également par concordance des formes la forme de différentes pièces techniques, telles que les tuyaux de commande reliant l'électrovanne à un turbocompresseur du moteur, situées près de ladite face d'appui de la culasse.

L'écran thermique peut être réalisé, par exemple, à partir d'une structure multicouche comprenant une matière thermiquement isolante prise en « sandwich » entre deux feuilles métalliques.

La présente invention a également pour objet un moteur de véhicule, dans lequel le ou les électrovannes, située(s) au dessus du collecteur d'échappement, est ou sont protégée(s) de ce dernier par un dispositif de protection thermique étanche conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, le principe d'un dispositif de protection thermique des électrovannes dans un moteur de véhicule, selon l'art antérieur,
- la figure 2 représente, de manière schématique également, le principe d'un dispositif de protection thermique étanche des électrovannes dans un moteur de véhicule, selon la présente invention, et
- la figure 3 est une vue en perspective du dispositif de protection thermique de la figure 2 en position d'utilisation, la culasse ayant été enlevée pour plus de clarté dans la représentation du joint de l'invention.

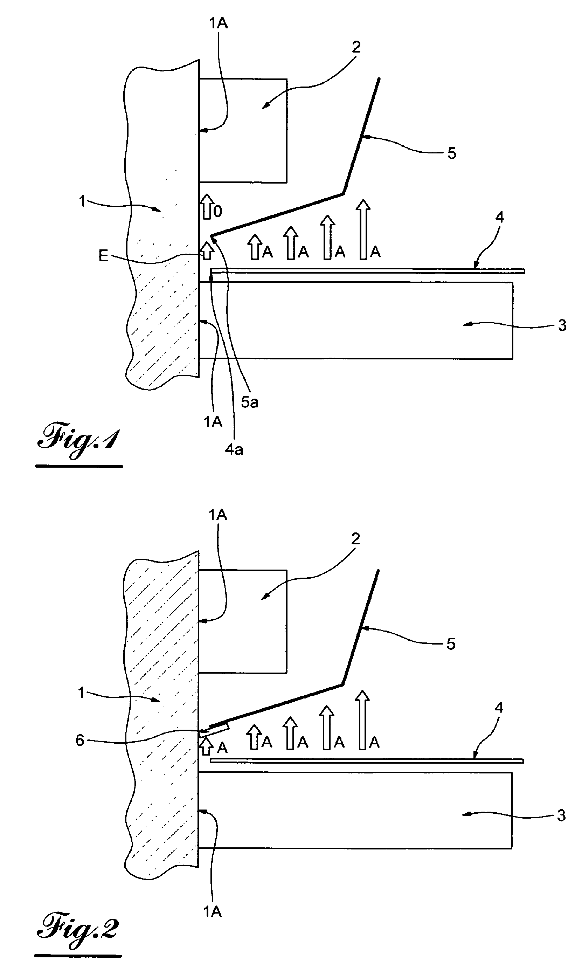

En référence au dessin de la figure 1, on a représenté, de manière schématique, sur une partie supérieure de culasse de moteur, de référence 1, un ensemble d'électrovannes, de référence générale 2, situé au dessus du collecteur d'échappement 3 qui a pour fonction, de manière conventionnelle, de guider les gaz issus du moteur de la sortie des cylindres vers le système d'échappement.

La culasse 1 n'est représentée que partiellement par sa face 1 A tournée vers les électrovannes 2 et le collecteur d'échappement 3.

La référence 4 désigne l'écran thermique du collecteur d'échappement 3, situé juste au dessus et fixé sur ce dernier, en matériau relativement rigide, qui protège thermiquement l'environnement du collecteur d'échappement 3 en supportant des températures élevées de l'ordre de 400°C ou plus. Cet écran thermique 4 peut être réalisé, par exemple, à partir d'une feuille d'acier ou d'aluminium gaufré ou bien à partir d'une matière thermiquement isolante prise « en sandwich » entre deux feuilles métalliques.

La référence 5 désigne une protection thermique des électrovannes 2 sous la forme d'un déflecteur thermique qui dévie les courants d'air chaud, référencés A, des électrovannes 2. Ce déflecteur thermique 5 se présente également sous la forme d'une pièce relativement rigide, obtenue à partir d'une feuille métallique ou plastique.

Les tolérances dimensionnelles et le caractère rigide de l'écran 4 et du déflecteur thermique 5 ont pour conséquence que ces derniers ne viennent pas, par leur extrémité 4a, 5a, respectivement, en contact avec la face d'appui 1 A en regard de la culasse 1. Cette absence de contact précis a pour conséquence un risque important de flux d'air chaud, désigné « E » sur la figure 1, par effet « cheminée », et donc un risque important de montée en température des électrovannes 2 au-delà de leur température maximale de résistance, qui est de l'ordre de 130°C.

Pour surmonter cette difficulté, il est prévu, comme représenté schématiquement sur la figure 2, d'utiliser un joint d'étanchéité, de référence 6, fixé sur l'écran thermique permettant de faire obstacle au passage d'air chaud E produit par effet cheminée. Le joint d'étanchéité 6 est réalisé en matière formable et souple, de manière à épouser la forme de la culasse 1 dans sa partie d'appui sur cette dernière. De manière préférentielle, le joint d'étanchéité 6 est réalisé en caoutchouc, en métal souple, ou bien en tissu recouvert de silicone.

Le joint d'étanchéité 6 est fixé sur le déflecteur thermique 5 par tout type de procédé de fixation conventionnel, comme par exemple par rivetage, par collage, par vissage ou bien par surmoulage.

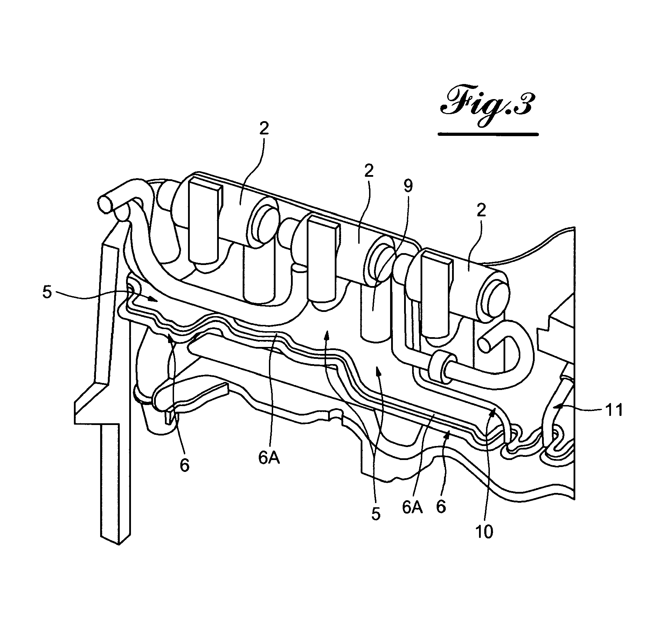

On a représenté sur le dessin de la figure 3 le dispositif de protection thermique à joint d'étanchéité selon la présente invention en position d'utilisation sur la culasse d'un moteur de véhicule, la culasse ayant été toutefois enlevée pour plus de clarté dans la représentation du joint d'étanchéité.

Le joint d'étanchéité 6, fixé sur le pourtour du déflecteur thermique 5, présente lui-même un pourtour 6A qui épouse par concordance des formes le profil de la face d'appui 1 A de la culasse 1 (non représentée) sur laquelle il est plaqué de manière étanche grâce à la souplesse et à la déformabilité de sa matière constitutive. Sur cette figure 3, on a représenté les électrovannes 2, l'écran thermique 4 du collecteur d'échappement, et la connectique électrique 9.

De manière avantageuse, le joint d'étanchéité 6 épouse également par concordance des formes la section de différentes pièces techniques reliant les électrovannes au turbo et situés près de la face d'appui 1A de la culasse 1, par exemple les tuyaux de commande référencés 10 et 11 sur la figure 3.

L'invention décrite ci-dessus présente de nombreux avantages. Ainsi, elle garantit la tenue la tenue des électrovannes dans un moteur de véhicule malgré leur positionnement au dessus du collecteur d'échappement.

De plus l'invention permet de mieux utiliser la place au dessus de la zone très chaude, dans le cas des électrovannes d'un moteur de véhicule, de mieux utiliser la place au dessus du collecteur d'échappement souvent mal optimisée.

De plus, l'invention permet, sur les moteurs de véhicules automobiles, de regrouper les quatre électrovannes au même endroit les unes à côté des autres, et par conséquent de limiter la complexité et le coût du circuit de vide correspondant.

Enfin, l'invention a pour résultat de simplifier le montage des électrovannes sur les moteurs de véhicules.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Moteur thermique comportant au moins une électrovanne située au dessus d'un collecteur d'échappement du moteur et un dispositif de protection thermique étanche de l'électrovanne, comprenant un écran thermique (4) du collecteur d'échappement (3) et un déflecteur thermique (5) de l'électrovanne (2) qui s'étendent tous les deux entre le collecteur d'échappement (3) et l'électrovanne (2) et sont dirigés par une de leur extrémité vers une face d'appui (1A) de la culasse (1) du moteur, **caractérisé en ce qu'**il est prévu un joint d'étanchéité (6), fixé sur la partie du pourtour du déflecteur thermique (5) en regard de la face d'appui (1A) de la culasse (1), qui épouse par concordance de forme ladite face d'appui (1A) de façon à constituer une protection thermique étanche de l'électrovannes (2) en bloquant le passage des flux d'air chaud entre le déflecteur thermique (5) et la face d'appui de la culasse.

2. Moteur selon la revendication 1, **caractérisé en ce que** le joint d'étanchéité (6) est réalisé en caoutchouc synthétique.

3. Moteur selon la revendication 1, **caractérisé en ce que** le joint d'étanchéité (6) est réalisé en tissu recouvert de silicone

4. Moteur selon l'une quelconque des revendications 1 à 3, **caractérisé en ce que** le joint d'étanchéité (6) est fixé sur le déflecteur thermique (5) par un moyen de fixation choisi parmi les moyens de fixation suivants : collage, rivetage, vissage, surmoulage.

5. Moteur selon l'une quelconque des revendications 1 à 4, **caractérisé en ce que** le déflecteur thermique (5) est en métal ou en matière plastique.

6. Moteur selon la revendication 5, **caractérisé en ce que** le déflecteur thermique (5) est en aluminium gaufré.

7. Moteur selon l'une quelconque des revendications précédentes, **caractérisé en ce que** le joint d'étanchéité (6) épouse également par concordance de forme la forme de pièces techniques situées près de ladite face d'appui (1A) de la culasse (1).

8. Moteur selon la revendication 7, **caractérisé en ce que** les dites pièces techniques sont des tuyaux de commande (10, 11) reliant l'électrovanne à un turbocompresseur associé au moteur.

9. Moteur selon l'une quelconque des revendications précédentes, **caractérisé en ce que** l'écran thermique (4) est réalisé à partir d'une structure multicouche comprenant une matière thermiquement isolante prise en « sandwich » entre deux feuilles métalliques.

## Claims

1. A combustion engine including at least one solenoid valve located above an exhaust manifold of the engine and an airtight device for thermal protection of the solenoid valve, including a heat shield (4) for the exhaust manifold (3) and a heat deflector (5) for the solenoid valve (2), both of which extend between the exhaust manifold (3) and the solenoid valve (2) and are directed by one of their extremities towards a bearing surface (1A) of the cylinder head (1) of the engine, **characterized in that** a gasket (6) is provided and attached to the the part of the rim of the heat deflector (5) opposite the bearing surface (1A) of the cylinder head (1) which is conformed with said bearing surface (1A) in such manner as to create an airtight thermal protection for the solenoid valves (2) by blocking the passage of airflows between the heat deflector (5) and the bearing surface of the cylinder head.

2. The engine as recited in claim 1, **characterized in that** the gasket (6) is made from synthetic rubber.

3. The engine as recited in claim 1, **characterized in that** the gasket (6) is made from fabric covered with silicone.

4. The engine as recited in any of claims 1 to 3, **characterized in that** the gasket (6) is fixed securely on the heat deflector (5) by a fixing means chosen from the following fixing means: adhesion, riveting, screwing, overmoulding.

5. The engine as recited in any of claims 1 to 4, **characterized in that** the heat deflector (5) is made from metal or a plastic material.

6. The engine as recited in claim 5, **characterized in that** the heat deflector (5) is made from embossed aluminium.

7. The engine as recited in any of the preceding claims, **characterized in that** the gasket (6) is also conformed to match the shape of the technical elements located close to the bearing surface (1A) of the cylinder head (1) .

8. The engine as recited in claim 7, **characterized in that** the technical elements are control pipes (10, 11) that connect the solenoid valve to a turbocharger associated with the engine.

9. The engine as recited in any of the preceding claims, **characterized in that** the heat shield (4) is produced on the basis of a multilayer structure including a thermally insulating material situated in a "sandwich" structure between two metal sheets.

## Patentansprüche

1. Verbrennungsmotor, der mindestens ein Magnetventil aufweist, das sich oberhalb eines Auslasssammlers des Motors befindet, und eine dichte Wärmeschutzvorrichtung des Magnetventils, die eine Wärmeabschirmung (4) des Auslasssammlers (3) und einen Wärmeablenker (5) des Magnetventils (2), die sich beide zwischen der in dem Auslasssammler (3) und dem Magnetventil (2) erstrecken und sich an einem ihrer Enden zu einer Auflageseite (1A) des Zylinderkopfs (1) des Motors richten, aufweist, **dadurch gekennzeichnet, dass** eine Dichtung (6) vorgesehen ist, die auf dem Teil des Umfangs des Wärmeablenkers (5) gegenüber der Auflageseite (1A) des Zylinderkopfes (1) befestigt ist, die sich durch Formübereinstimmung an die Auflageseite (1A) derart schmiegt, dass sie einen dichten Wärmeschutz des Magnetventils (2) bildet, indem sie den Durchgang der Warmluftströme zwischen dem Wärmeablenker (5) und der Auflageseite des Zylinderkopfs blockiert.

2. Motor nach Anspruch 1, **dadurch gekennzeichnet, dass** die Dichtung (6) aus einem synthetischen Kautschuk hergestellt ist.

3. Motor nach Anspruch 1, **dadurch gekennzeichnet, dass** die Dichtung (6) aus einem mit Silikon überzogenen Stoff besteht.

4. Motor nach einem der Ansprüche 1 bis 3, **dadurch gekennzeichnet, dass** die Dichtung (6) auf dem Wärmeablenker (5) durch ein Befestigungsmittel befestigt ist, das aus den folgenden Befestigungsmitteln ausgewählt ist: Kleben, Nieten, Schrauben, Abformen.

5. Motor nach einem der Ansprüche 1 bis 4, **dadurch gekennzeichnet, dass** der Wärmeablenker (5) aus Metall oder einem Kunststoff besteht.

6. Motor nach Anspruch 5, **dadurch gekennzeichnet, dass** der Wärmeablenker (5) aus wabengeprägtem Aluminium besteht.

7. Motor nach einem der vorhergehenden Ansprüche, **dadurch gekennzeichnet, dass** sich die Dichtung (6) auch durch Formübereinstimmung an die Form der technischen Teile schmiegt, die sich in der Nähe der Auflageseite (1A) des Zylinderkopfes (1) befinden.

8. Motor nach Anspruch 7, **dadurch gekennzeichnet, dass** die technischen Teile Steuerrohrleitungen (10, 11) sind, die das Magnetventil mit einem zu dem Motor gehörenden Turbolader verbinden.

9. Motor nach einem der vorhergehenden Ansprüche, **dadurch gekennzeichnet, dass** die Wärmeabschirmung (4) von einer mehrschichtigen Struktur ausgehend hergestellt ist, die einen wärmeisolierenden Werkstoff aufweist, der zwischen zwei Metallschichten ins "Sandwich" genommen ist.
